Europäisches Patentamt

European Patent Office

Office européen des brevets

(19)

(11) Veröffentlichungsnummer: **0 006 525**
**B1**

(12) **EUROPÄISCHE PATENTSCHRIFT**

(45) Veröffentlichungstag der Patentschrift: **20.05.81**

(21) Anmeldenummer: **79101892.2**

(22) Anmeldetag: **11.06.79**

(51) Int. Cl.³: **C 04 B 43/00, C 04 B 19/04**
**//C09K3/28, C09D5/18**

(54) Alterungsbeständiges Brandschutzmaterial, Verfahren zur Herstellung desselben und Verwendungen.

(30) Priorität: **24.06.78 DE 2827828**

(43) Veröffentlichungstag der Anmeldung:
**09.01.80 Patentblatt 80/1**

(45) Bekanntmachung des Hinweises auf die Patenterteilung:
**20.05.81 Patentblatt 81/20**

(84) Benannte Vertragsstaaten:
**BE CH DE FR GB IT NL SE**

(56) Entgegenhaltungen:
DE - A - 1 954 597
FR - A - 2 212 826
US - A - 2 047 016
US - A - 3 498 807
US - A - 4 036 655

(73) Patentinhaber: **BASF Aktiengesellschaft**
**Carl-Bosch-Strasse 38**
**D-6700 Ludwigshafen (DE)**

(72) Erfinder: **Caesar, Arndt Christian**
**Moerscher Strasse 98 a**
**D-6710 Frankenthal (DE)**
Erfinder: **Koegel, Wolfram**
**Thueringer Strasse 31**
**D-6800 Mannheim 41 (DE)**
Erfinder: **Zuern, Ludwig, Dr.**
**Halsbergstrasse 2 a**
**D-6702 Bad Duerkheim 1 (DE)**
Erfinder: **Gaertner, Friedhelm**
**Mittelstrasse 6**
**D-6520 Worms (DE)**

Alterungsbeständiges Brandschutzmaterial, Verfahren zur Herstellung desselben und Verwendungen

Die Erfindung betrifft ein Brandschutzmaterial auf Basis von wasserhaltigem Alkalimetallsilikat, welches zur Erhöhung der Alterungsbeständigkeit Borate oder Aluminate zugesetzt enthält.

Brandschutzmaterialien aus wasserhaltigen Alkalimetallsilikaten sind seit langem bekannt und werden bereits vielfältig für den vorbeugenden Brandschutz eingesetzt. Sie bewirken bei hohen Temperaturen, wie sie z.B. im Brandfalle auftreten, durch Schaumbildung, Volumenvergrößerung und Ausbildung eines Schäumdrucks eine hervorragende Isolierung gegen Feuer und Rauch, und führen so eine Abdichtung von Öffnungen und Durchgängen in Baukörpern herbei. Derartige Materialien, sowie Verfahren zu ihrer Herstellung sind in den DE—B—11 76 546, 11 69 832 und 14 71 005, sowie in den DE—A—26 50 520, 27 03 022 und 28 17 268 beschrieben.

Diese Brandschutzmaterialien werden in einer zunehmenden Zahl von Einsatzgebieten verwendet, wodurch an das Material immer neue und erhöhte Anforderungen gestellt werden. So können die Materialien in wasserdampfdichte Hüllen eingesiegelt werden. Werden die so eingehüllten Materialien erhöhter Temperatur ausgesetzt, so kann sich das Feuchtigkeitsgleichgewicht zwischen den Materialien und der Umgebungsluft nicht mehr einstellen. Es hat sich nun gezeigt, daß unter diesen Bedingungen die Wirksamkeit des Brandschutzmaterials z.B. nach einigen Wochen Lagerung bei 80°C nachläßt. Dabei ist jeweils die Zeitdauer eine Funktion der Temperatur. Die nachlassende Wirksamkeit macht sich durch eine verringerte Volumenvergrößerung beim Aufschäumen bemerkbar.

Der Erfindung lag nun die Aufgabe zugrunde, diese Abnahme der Aufschäumstärke des Brandschutzmaterials bei längerer Lagerung bei hohen Temperaturen zu beeinflussen und durch Zugabe geeigneter Zusatzstoffe weitgehend zu unterdrücken. Es wurde gefunden, daß diese Aufgabe gelöst wird, wenn man ein Brandschutzmaterial verwendet, das besteht aus:

A.  99—90 Gewichtsprozent eines Alkalimetallsilikats mit einem Wassergehalt von 20—60 Gewichtsprozent, und

B.  1—10 Gewichtsprozent Borsäure, eines Borats, eines Aluminats oder eines Alumosilikats.

Aus der FR—A 2 212 826 ist ein schaumförmiges Material zur Wärme- und Schallisolierung bekannt, das hergestellt wird aus einer Alkalimetallsilikat-Lösung, einem Härtungsmittel, einem Schaumbildner und blättrigem Vermiculit oder expandiertem Perlit, und das ggf. Glasfasern enthalten kann. Das Härtungsmittel ist vorzugsweise ein Fluorosilikat, es können aber u.a. auch Borate und Aluminate eingesetzt werden. Sie sollen eine Umwandlung des Alkalimetallsilikats in ein schwerlösliches Alkalimetallsalz einerseits und unlösliche Kieselsäure andererseits bewirken.

Die Alkalimetallsilikate A sind in den oben zitierten Druckschriften ausführlich beschrieben. Ihr Wassergehalt liegt vorzugsweise zwischen 25 und 40 Gewichtsprozent. Besonders geeignet ist Natriumsilikat mit einem Molverhältnis $Na_2O:SiO_2$ von 1:1 bis 1:6, vorzugsweise von 1:2,5 bis 1:4.

Geeignete Zusatzstoffe B sind z.B. Borsäure, Borax und Alkalimetallaluminate, insbesondere Natriumaluminat, welches vorzugsweise in Mengen von 2 bis 6 Gewichtsprozent, bezogen auf die Summe A + B, zugesetzt wird. Wenn in wäßrigem System Aluminat- und Silikat-Ionen zusammentreffen, können sich Alumosilikate (Zeolithe) bilden. Diese können natürlich auch direkt in vorgebildeter Form als Zusatzstoffe B eingesetzt werden.

Daneben können die erfindungsgemäßen Brandschutzmaterialien noch übliche Zusatzstoffe enthalten, wie Netzmittel, z.B. Natriumsulfonat; Schäumhilfsmittel, z.B. Kohlehydrate oder Cellulosepulver, die im Brandfalle ein Kohlenstoffgerüst bilden; Pigmente und Farbstoffe; sowie Verstärkungsmittel, z.B. mineralische, metallische oder textile Fasern, Gewebe oder Gitter. Bevorzugtes Verstärkungsmittel sind Glasfasern, die in Mengen von 2 bis 20 Gewichtsprozent, bezogen auf die Summe A + B zugesetzt werden.

Das erfindungsgemäße Brandschutzmaterial wird hergestellt, indem man die Borate oder Aluminate B einer wäßrigen Suspension des Alkalimetallsilikats A zusetzt und die Masse auf den gewünschten Wassergehalt trocknet und verfestigt. Dabei erwies es sich als besonders wirksam, wenn die Komponente B in feinster Form möglichst homogen in der Komponente A verteilt ist. Je nachdem, an welcher Stelle des Herstellungsprozesses der Alkalimetallsilikat-Suspension die Komponente B dieser Suspension zugesetzt wird, kann man die Komponente B in fester Form, als wäßrige Lösung oder als wäßrige Suspension einsetzen. So kann man z.B. die Komponente B direkt in die fertige wäßrige Alkalimetallsilikat-Suspension einquirlen. Man kann aber auch bei der Herstellung der Alkalimetallsilikat-Suspension durch Vermischen eines Alkalimetallsilikat-Pulvers mit einer Alkalimetallsilikat-Lösung die Komponente B in fester bzw. gelöster Form entweder dem Pulver oder der Lösung zudosieren. Ebenso können in geeigneter Weise gegebenenfalls die weiteren Zusatzstoffe zugegeben werden.

Das erfindungsgemäße Brandschutzmaterial kann wie üblich in Streifen oder Bahnen geschnitten werden, mit Trennmitteln, z.B. Talkum, gepudert werden, mit Überzügen, z.B. Lacken auf Basis von Epox-

# 0 006 525

idharzen, Polyvinylchlorid oder Polyurethanen versehen werden und mit Folien aus Kunststoffen oder aus Metallen, z.B. Aluminium umhüllt werden.

Die Brandschutzmaterialien werden zur Isolierung von Öffnungen und Durchgängen an Baukörpern gegen den Durchtritt von Feuer und Rauch, sowie als Brandschutzglas verwendet. Sie zeichnen sich durch eine besonders hohe Alterungsbeständigkeit aus und entfalten ihre Wirkung unvermindert auch noch nach sehr langer Gebrauchsdauer.

Die in den Beispielen genannten Teile und Prozente beziehen sich auf das Gewicht. Als Kriterium für die Wirksamkeit der Zusatzstoffe wurde das Schäumverhalten des Brandschutzmaterials gewählt. Dazu wurden Brandschutzstreifen der Abmessung 100 x 200 x 2 mm bei 600°C 5 min lang in einem Glühofen erhitzt. Gemessen wurde die Dicke des sich bildenden Schaums, die mit zunehmender Lagerzeit der Streifen bei 95°C abnimmt, sowie die Dauer der Lagerzeit bis zum Abfall der Schaumdicke auf die Hälfte.

Angegeben wird die prozentuale Verlängerung dieser Zeitdauer, die durch den Zusatz des Aluminate bzw. Borate gegenüber einem Brandschutzstreifen ohne einen solchen Zusatz erreicht werden kann.

## Beispiel 1

Eine Natriumsilikat-Standardsuspension wurde hergestellt durch Vermischen von 100 Teilen einer Natriumsilikat-Lösung (Feststoffgehalt 35%) mit 32 Teilen Natriumsilikat-Pulver (Feststoffgehalt 82%). Zu dieser Suspension wurden in verschiedenen Versuchen folgende Mengen Natriumaluminatpulver zugesetzt und intensiv vermischt.

| Versuch | Teile |
|---------|-------|
| 1 | 0 |
| 2 | 2,5 |
| 3 | 3,7 |
| 4 | 4,9 |

Auf einem Endlosband wurden 0,2 kg/m² Schnittglasfasern gestreut und dann 4,5 kg/m² der verschiedenen Suspensionen zugegeben. Durch Infrarotstrahler (Einwirkungsdauer etwa 4 Minuten) wurden die Mischungen auf dem Endlosband auf etwa 90°C aufgeheizt, wobei sie gelierten und anschließend auf eine Restfeuchte von 32% getrocknet wurden. Aus dem Material wurden Probestreifen geschnitten, die in wasserdampfdichte Hüllen aus Aluminium-Verbundfolie eingesiegelt wurden. Die so umhüllten Streifen wurden bei 95°C so gelagert, daß ihr Wassergehalt sich nicht veränerte. In gewissen Zeitabständen wurden dem Lagerraum die Probestreifen entnommen und die Schaumhöhe ermittelt.

Folgende Ergebnisse wurden dabei erhalten:

| Versuch | Gehalt an natriumaluminat (bezogen auf A + B) | prozentuale Verlängerung |
|---------|-----------------------------------------------|--------------------------|
| 1 | 0 | 100 (Bezugswert) |
| 2 | 2,6 | 360 |
| 3 | 4,0 | 500 |
| 4 | 5,2 | 430 |

## Beispiel 2

Der Natriumsilikat-Standardsuspension des Beispiels 1 wurden verschiedene Mengen einer 50 prozentigen wäßrigen Kaliumaluminat-Lösung zugesetzt. Die Suspension wurde in Kunststoff-Formen gegossen, Glasfasern wurden zugegeben und die Masse wurde geliert und auf eine Restfeuchte von 32% getrocknet. Die Probekörper wurden wie in Beispiel 1 behandelt und die Verlängerung der Schaumfähigkeit gemessen

# 0 006 525

| Versuch | Gehalt an Kaliumaluminat (bezogen auf A + B) | prozentuale Verlängerung |
|---|---|---|
| 1 | 0 | 100 |
| 2 | 1,2 | 200 |
| 3 | 2,6 | 370 |
| 4 | 4,0 | 430 |

## Beispiel 3

Auf einem ebenen, endlos umlaufenden Band wurden kontinuierlich 200 g/cm², auf 50 mm Länge geschnittene Glasfasern verteilt. Hierauf wurden über einen Walzenzuteilapparat 1230 g/m² eines Natriumsilikatpulvers mit einem Feststoffgehalt von 84% gestreut. Diese Pulvermischung wurde dann gleichmäßig mit 1760 g/m² einer Suspension durchtränkt. Die Suspension war hergestellt worden aus

1200 Teilen Natriumsilikatlösung mit 35% Feststoff.
400 Teilen Natriumsilikatpulver mit 84% Feststoff.
107 Teilen Natriumaluminatpulver und
53 Teilen Wasser.

Die Masse wurde durch 3 minütige Bestrahlung mit einer Infrarotlampe bei 90°C geliert und auf einen Restwassergehalt von 36% gebracht. Der Natriumaluminat-Gehalt in dem fertigen Brandschutzmaterial (bezogen auf A + B) betrug 3,6%. Das Material wurde wie in den vorhergehenden Beispielen behandelt, die gemessenen Schaumhöhen zeigten bezogen auf eine Vergleichsprobe, die kein Natriumaluminat enthält, eine Verlängerung der Schaumfähigkeit auf 500%.

## Beispiel 4

Entsprechend Beispiel 2 wurden in Kunststofformen Probeplatten hergestellt, wobei der Standard-Suspension soviel Borsäurepulver zugesetzt wurde, daß die fertigen Platten nach dem Trocknen auf einen Restwassergehalt von 32% 4% Borsäure enthielten. Die prozentuale Verlängerung der Schaumfähigkeit bis zu einer Maßnahme der Schaumdicke auf die Hälfte betrug 400% gegenüber Platten, die den Zusatz nicht enthielten.

## Beispiel 5

400 g Natriumsilikatlösung mit 35% Feststoffanteil werden mit 40 g Natriumaluminatpulver (98% Feststoff) gemischt. Es entsteht unter kräftiger Wärmeentwicklung eine zuerst zähe, später feste, gelierte Masse, die bis zur Beendigung der Reaktion zu Natriumaluminiumsilikat etwa 2 Stunden bei Raumtemperatur abkühlt.

Dieses Gelat wird mit 400 g Natriumsilikatlösung mit 35% Feststoffgehalt und 270 g Natriumsilikatpulver mit 82% Feststoff gemischt und mit Zugabe von 40 g Glasfasern zu einer Platte von 500 x 500 x 2 mm geformt. Die nach dem Trocknen auf etwa 33% Restwassergehalt daraus geschnittenen Prüfplatten werden der in den vorigen Beispielen beschriebenen Wärmebehandlung unterworfen und geprüft. Die Wirksamkeit des Zusatzstoffes wird mit 300% gegenüber Vergleichsproben ohne diesen Zusatz festgestellt.

## Beispiel 6

Zu 1,200 g Natriumsilikatlösung mit 35% Feststoffgehalt werden 100 g Natriumaluminiumsilikat (Zeolith) mit einem Feststoffanteil von 88% sowie 400 g Natriumsilikatpulver mit 82% Feststoffgehalt eingemischt. Die Masse wird mit 60 g Glasfasern in Kunststofformen zu 3 mm dicken Platten geformt und auf einem Restwassergehalt von etwa 35% getrocknet. Nach der im Beispiel 1 beschriebenen Wärmelagerung und nach der Prüfung ergibt sich eine Zunahme der Lagerdauer, bis zu der weniger als 50% der ursprünglichen Schaumdicke festgestellt wird, von 350% im Vergleich zur Probenplaten ohne diesen stabilisierenden Zusatz.

## Patentansprüche

1. Bei hohen Temperaturen im Brandfall einen Schaum bildendes Brandschutzmaterial auf Basis eines wasserhaltigen Alkalimetallsilikats, welches ggf. Netzmittel, Schäumhilfsmittel, Farbstoffe, Pigmente und/oder faserige Verstärkungemittel enthält, dadurch gekennzeichnet, daß es

A) 90—99 Gewichtsprozent eines Alkalimetallsilikats mit einem Wassergehalt von 20—60 Gewichtsprozent und
B) 1—10 Gewichtsprozent Borsäure, eines Borats, eines Aluminats oder eines Alumosilikats, jeweils bezogen auf die Summe der Gewichte von A und B, enthält.

2. Brandschutzmaterial nach Anspruch 1, dadurch gekennzeichnet, daß das Alkalimetallsilikat einen Wassergehalt von 25 bis 40 Gewichtsprozent hat.

3. Brandschutzmaterial nach Anspruch 1, dadurch gekennzeichnet, daß das Alkalimetallsilikat Natriumsilikat mit einem Molverhältnis $Na_2O:SiO_2$ von 1:1 bis 1:6, vorzugsweise 1:2,5 bis 1:4 ist.

4. Brandschutzmaterial nach Anspruch 1, dadurch gekennzeichnet, daß die Komponente B ein Alkalimetallaluminat oder Borax ist.

5. Brandschutzmaterial nach Anspruch 1 und 4, dadurch gekennzeichnet, daß es 2 bis 6 Gewichtsprozent Natriumaluminat enthält.

6. Brandschutzmaterial nach Anspruch 1, dadurch gekennzeichnet, daß es 2 bis 20 Gewichtsprozent, bezogen auf die Summe der Gewichte von A + B, an Glasfasern enthält.

7. Verfahren zur Herstellung eines Brandschutzmaterials, bei dem feste, in Wasser suspendierte Stoffe einer wäßrigen Suspension eines Alkalimetallsilikats (A) zugesetzt werden und die Suspension auf einen gewünschten Wassergehalt getrocknet wird, dadurch gekennzeichnet, daß Borsäure, Borate, Aluminate oder Alumosilikate (B), ggf. zusammen mit Netzmitteln, Schäumhilfsmitteln, Farbstoffe, Pigmenten oder faserigen Verstärkungsmitteln, in solcher Menge der Alkalimetallsilikatsuspension zugesetzt werden, daß beim Trocknen auf einen Wassergehalt von 20—60 Gewichtsprozent ein Brandschutzmaterial mit 1—10 Gewichtsprozent von B, bezogen auf die Summe der Gewichte von A und B, erhalten wird.

8. Verwendung des Brandschutzmaterials nach Anspruch 1 zur Isolierung von Öffnungen und Durchgängen an Baukörpern gegen den Durchtritt von Feuer und Rauch.

9. Verwendung des Brandschutzmaterials nach Anspruch 1 als Brandschutzglas.

## Claims

1. A fireproofing material which forms a foam at high temperatures in the event of fire, is based on a water-containing alkali metal silicate and may contain wetting agents, foaming assistants, dyes, pigments and/or fibrous reinforcing agents, characterized in that it contains

A)   90—99 per cent by weight of an alkali metal silicate containing 20—60 per cent by weight of water and

B)   1—10 per cent by weight of boric acid, a borate, an aluminate or an aluminosilicate, each based on the sum of A and B.

2. A fireproofing material as claimed in claim 1, characterized in that the alkali metal silicate contains from 25 to 40 per cent by weight of water.

3. A fireproofing material as claimed in claim 1, characterized in that the alkali metal silicate is sodium silicate with a molar ratio $Na_2O:SiO_2$ of from 1:1 to 1:6, preferably from 1:2.5 to 1:4.

4. A fireproofing material as claimed in claim 1, characterized in that component B is an alkali metal aluminate or borax.

5. A fireproofing material as claimed in claims 1 and 4, characterized in that it contains from 2 to 6 per cent by weight of sodium aluminate.

6. A fireproofing material as claimed in claim 1, characterized in that it contains from 2 to 20 per cent by weight, based on the sum of A + B, of glass fibres.

7. A process for the preparation of a fireproofing material in which solid substances suspended in water are added to an aqueous suspension of an alkali metal silicat (A), and the suspension is dried to a desired water content, characterized in that boric acid, a borate, an aluminate or an aluminosilicate (B) is added, with or without wetting agents, foaming assistants, dyes, pigments or fibrous reinforcing agents, to the alkali metal silicate suspension in such an amount that, upon drying to a water content of 20 to 60 per cent by weight, a fireproofing material containing 1 to 10 per cent by weight of B, based on the sum of A and B, is obtained.

8. Use of a fireproofing material as claimed in claim 1 for insulating apertures and passages in building structures against the passage of fire and smoke.

9. Use of a fireproofing material as claimed in claim 1 as a fireproofing glass.

## Revendications

1. Matériau de protection contre le feu produisant, en cas d'incendie, de la mousse aux températures élevées, à base d'un silicate de métal alcalin hydraté et contenant, le cas échéant, un agent mouillant, un additif moussant, des colorants, des pigments et(ou) des matières de renforcement fibreuses, carctérisé en ce qu'il contient:

A)   90 à 99% en poids d'un silicate de métal alcalin avec une teneur en eau comprise entre 20 et 60% en poids et

B)   1 à 10% en poids d'acide borique, d'un borate, d'un aluminate ou d'un alumino-silicate,

ces proportions se rapportant à la somme de poids des A et de B.

2. Matériau de protection contre le feu suivant la revendication 1, caractérisé en ce que le silicate de métal alcalin possède une teneur en eau comprise entre 25 et 40% en poids.

3. Matériau de protection contre le feu suivant la revendication 1, caractérisé en ce que le silicate de métal alcalin est du silicate de sodium avec un rapport molaire $Na_2O:SiO_2$ compris entre 1:1 et 1:6 et de préférence entre 1:2,5 et 1:4.

4. Matériau de protection contre le feu suivant la revendication 1, caractérisé en ce que la composante B est un aluminate de métal alcalin ou du borax.

5. Matériau de protection contre le feu suivant l'une des revendications 1 à 4, caractérisé en ce qu'il contient entre 2 et 6% en poids d'aluminate de sodium.

6. Matériau de protection contre le feu suivant la revendication 1, caractérisé en ce qu'il renferme entre 2 et 20% en poids, par rapport à la somme des poids de A et de B, de fibres de verre.

7. Procédé de fabrication d'un matériau de protection contre le feu, consistant à ajouter à une suspension aqueuse d'un silicate de métal alcalin (A) des matières solides en suspension dans de l'eau et à ramener ensuite par séchage la teneur en eau de la suspension à une valeur déterminée, caractérisé en ce que l'on ajoute à la suspension de silicate de métal alcalin de l'acide borique, des borates, des aluminates, ou des alumino-silicates (B), ainsi qu'éventuellement des agents mouillants, des additifs moussants, des colorants, des pigments ou des matières de renforcement fibreuses, en des proportions telles que le séchage subséquent jusqu'à une teneur en eau comprise entre 20 et 60% en poids produise un matériau de protection contre le feu comprenant entre 1 et 10% en poids, par rapport à la somme des poids de A et de B, de composante B.

8. Utilisation d'un matériau de protection contre le feu suivant la revendication 1 pour rendre des ouvertures et passages dans des éléments de construction étanches aux flammes et à la fumée.

9. Utilisation d'un matériau de protection contre le feu suivant la revendication 1 comme verre pare-feu.